Europäisches Patentamt

European Patent Office

Office européen des brevets

(19)

(11) Numéro de publication : **0 387 740 B1**

(12) **FASCICULE DE BREVET EUROPEEN**

(45) Date de publication du fascicule du brevet :
**01.09.93 Bulletin 93/35**

(51) Int. Cl.⁵ : **G02F 1/37,** G02B 6/22

(21) Numéro de dépôt : **90104613.6**

(22) Date de dépôt : **12.03.90**

(54) **Fibre optique pour la conversion de fréquence.**

(30) Priorité : **16.03.89 FR 8903475**

(43) Date de publication de la demande :
**19.09.90 Bulletin 90/38**

(45) Mention de la délivrance du brevet :
**01.09.93 Bulletin 93/35**

(84) Etats contractants désignés :
**DE FR GB IT NL**

(56) Documents cités :
APPLIED PHYSICS LETTERS, vol. 39, no. 6,
septembre 1981, pp 466-468, New York, US; Y.
SASAKI et al.: "Phase-matched sum-frequency light generation in optical fibres".
OPTICS LETTERS, vol. 13, no. 9, septembre
1988, pp 773-775, New York, US; M.A. SAIFI et
al.: "Second-harmonic generation in single-
mode and multimode fibers".
PATENT ABSTRACTS OF JAPAN, vol. 7, no. 67
(P-184)(1212), 19 Mars 1983 & JP A 57211125

(73) Titulaire : **ALCATEL N.V.**
**Strawinskylaan 341**
**NL-1077 XX Amsterdam (NL)**

(72) Inventeur : **Poumellec, Bertrand**
**17 allée du Fief Lambert**
**F-91190 GIF Sur Yvette (FR)**
Inventeur : **Auge, Jacques**
**2, rue des Frères Capitaine**
**F-91530 Saint Cheron (FR)**
Inventeur : **Fevrier, Hervé**
**11 Boulevard du 1er Mai**
**F-91300 Massy (FR)**
Inventeur : **Gabriagues, Jean-Michel**
**2bis, allée des Tilleuls**
**F-91290 La Norville (FR)**

(74) Mandataire : **Weinmiller, Jürgen et al**
**Lennéstrasse 9 Postfach 24**
**D-82336 Feldafing (DE)**

EP 0 387 740 B1

## Description

La présente invention concerne une fibre optique pour la conversion de fréquence, notamment le doublage et le triplage de fréquence.

On sait que le doublage de fréquence dans un matériau est la propriété de ce dernier de convertir un faisceau de fréquence $\omega$ en un faisceau de fréquence $2\omega$. Si $\omega$ correspond à une longueur d'onde de 1.064 nm, l'harmonique se trouve dans le vert à 532 nm. C'est un effet non linéaire du second ordre.

Le phénomène de doublage est interdit dans les matériaux possédant un centre d'inversion, tels que les verres homogènes. Il est donc nécessaire de briser cette symétrie dans la fibre pour observer cette conversion. L'article de M.E. FERMANN, L. LI, M.C. FARRIES et D.N. PAYNE, "Frequency-doubling by modal phase matching in poled optical fibers", Electronics Letters 7/1988, 24 n° 14, p. 894, indique que la fibre doit posséder des sites actifs, tels que des défauts ponctuels localisés autour ou sur les atomes de germanium ou de phosphore, ayant une forte dissymétrie, c'est-à-dire entraînant une hyperpolarisabilité importante. Mais ces sites doivent être répartis de manière non centro-symétrique, de façon à ce que la susceptibilité non linéaire soit non nulle.

Le problème posé est l'obtention d'un rendement de conversion important. Pour cela il est nécessaire que l'onde de pompe et l'onde émise se déplacent à la même vitesse, c'est-à-dire que les indices effectifs de la fibre pour $\omega$ et $2\omega$ soient égaux.

Actuellement, les fibres connues ne permettent pas de répondre à cette condition. Elles répondent à une autre condition aboutissant à une conversion moins intense : il s'agit du coefficient de non linéarité modulé suivant z par une fonction périodique de période $\Lambda$, avec

$$\Lambda = \frac{\lambda p}{2 \left| n_{eff}(2\omega) - n_{eff}(\omega) \right|} = 15 \text{ à } 30 \ \mu m$$

(Voir l'article de M.C. FARRIES, P. St J. RUSSEL, M.E. FERMANN and D.N. PAYNE : "Second-harmonic generation in an optical fiber by self written $X^{(2)}$ grating", Electronics Letters (1987) 23(7) p. 322-323). On y décrit la génération de la seconde et de la troisième harmoniques dans des fibres optiques à profil en saut d'indice (ou triangle), obtenue par la formation d'un tel réseau. La brisure de symétrie nécessaire pour le doublage est produit spontanément ou artificiellement par interaction de la matière avec la lumière à 3 ou à $2\omega$. La susceptibilité locale au point (r, $\theta$, z) est construite à partir de cette interaction ; elle possède une distribution spatiale déterminée par le recouvrement des modes supportant les ondes $\omega$ et $2\omega$. Le mode propageant $\omega$ étant imposé, celui de $2\omega$ est ab initio libre, et est déterminé par une condition de maximalisation des recouvrements. Néanmoins, l'efficacité de conversion reste faible, de l'ordre de 1 %.

La présente invention a pour but de réaliser une fibre optique ayant une efficacité de conversion très supérieure à celle des fibres optiques connues jusqu'à présent.

La présente invention a pour objet une fibre optique pour la conversion de fréquence, caractérisée par le fait que le coeur de la fibre présente une structure à profil d'indice annulaire à anneau unique permettant de réaliser l'accord de phase et le recouvrement optimum de deux modes propres de propagation de la fibre, l'un $LP_{01}$ propageant l'onde $\omega$ et l'autre $LP_{0k}$ l'onde $k\omega$ avec $2 \leq k \leq 4$ pour au moins une longueur d'onde comprise entre 0,4 $\mu m$ et 2,6 $\mu m$, le saut d'indice $\Delta n$ de l'anneau étant compris entre $2 \times 10^{-2}$ et $5 \times 10^{-2}$, le rayon intérieur $r_i$ de l'anneau étant compris entre 0,5 $\mu m$ et 1,5 $\mu m$, et le rayon extérieur $r_e$ de l'anneau étant compris entre 2 $\mu m$ et 3,5 $\mu m$.

De préférence, pour le doublage de fréquence, $\Delta n$ est compris entre $2 \times 10^{-2}$ et $3 \times 10^{-2}$.

De préférence, pour le triplage de fréquence, $\Delta n$ est compris entre $3 \times 10^{-2}$ et $5 \times 10^{-2}$.

La présente invention a également pour objet un laser faisant application de la fibre définie ci-dessus.

D'autres caractéristiques et avantages de la présente invention apparaîtront au cours de la description suivante de modes de réalisation donnés à titre illustratif mais nullement limitatif. Dans le dessin annexé :

- La figure 1 montre très schématiquement le saut d'indice $\Delta n$ dans une fibre optique dont le rayon du coeur est r.
- Les figures 2 à 5 sont des diagrammes représentant, pour des fibres selon l'invention différant par leur indice ou les dimensions de leur anneau, l'indice effectif $n_{eff}$ des modes existant dans ces fibres en fonction de la longueur d'onde ($\log_{10}\lambda$ ).
- La figure 6 est un schéma de principe d'un laser incorporant une fibre optique selon l'invention.

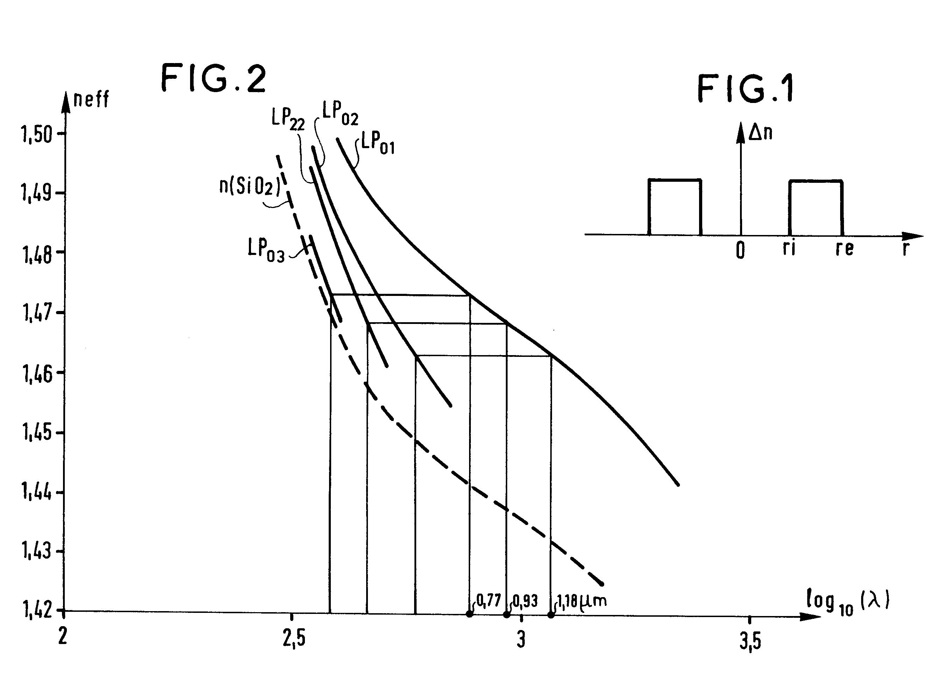

On a montré très schématiquement dans la figure 1 les variations de l'indice du coeur d'une fibre optique en silice selon l'invention à profil d'indice annulaire. Lorsque r est compris entre $r = r_i$ (r intérieur) et $r = r_e$ (r extérieur), l'indice croît d'une valeur $\Delta n$. Cet écart d'indice peut être obtenu par dopage avec des oxydes de germanium et/ou de phosphore. Le brevet français n° 87 14 286 du 16 octobre 1987 décrit un procédé de fabrication d'une telle fibre.

Les figures 2 à 5 sont des diagrammes montrant pour différents $\Delta n$, $r_i$ et $r_e$, les variations de l'indice effectif

2

$n_{eff}$ (en ordonnées) en fonction de la longueur d'onde $\lambda$ ($\log_{10} \lambda$ en abscisses) pour différents modes de propagation. $LP_{01}$, $LP_{02}$, $LP_{03}$, $LP_{04}$ correspondent aux modes d'ordre 0, d'azimut 0,1 ou 2 ; $LP_{11}$, $LP_{12}$, $LP_{13}$, $LP_{14}$, correspondent aux modes d'ordre 1, $LP_{21}$, $LP_{22}$, $LP_{23}$, aux modes d'ordre 2 etc.

Dans tous ces diagrammes, l'écart en $\log_{10}\lambda$ pour deux modes ayant le même indice effectif est 0,3 pour $\omega$ et $2\omega$ ; il est de 0,5 pour $\omega$ et $3\omega$.

Dans tous les cas, on injecte dans la fibre une onde $\omega$ dans le mode $LP_{01}$.

La figure 2 comporte en outre la courbe des variations de l'indice n de la silice $SiO_2$ en fonction de $\lambda$.

### Exemple I

On prend une fibre de diamètre extérieur 125 $\mu$m présentant un anneau ayant un saut d'indice $\Delta n = 3 \times 10^{-2}$, le rayon intérieur de l'anneau $r_i$ étant égal à 0,66 $\mu$m et le rayon extérieur $r_2$ étant égal à 2 $\mu$m. En se déplaçant le long de la courbe de dispersion $LP_{01}$ (figure 2) on trouve qu'un accord optimum pour la conversion $\omega$ en $2\omega$ est réalisé pour $\lambda = 1,18$ $\mu$m. Il existe des points d'accords secondaires à 0,93 $\mu$m entre $LP_{01}$ et $LP_{22}$, et à 0,77 $\mu$m entre $LP_{01}$ et $LP_{03}$.

### Exemple II

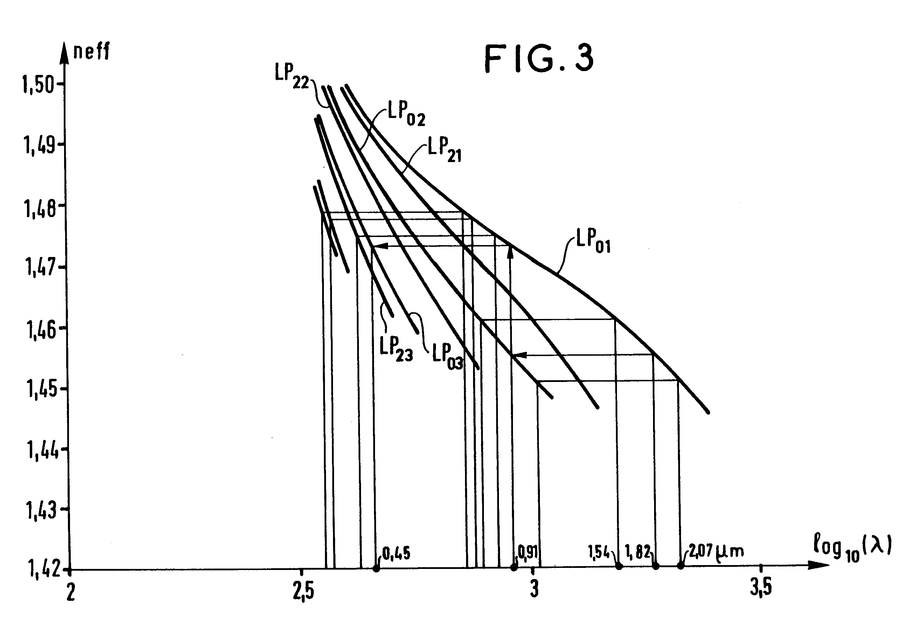

On prend une fibre de diamètre extérieur 125 $\mu$m présentant un anneau ayant un saut d'indice $\Delta n = 3 \times 10^{-2}$, le rayon intérieur étant égal à 1 $\mu$m et le rayon extérieur étant égal à 3 $\mu$m. On voit dans la figure 3 qu'il existe un accord de phase à l'ordre zéro et le recouvrement optimum des modes pour $\omega$ et $2\omega$ suivant une très large plage de longueurs d'onde, entre 1,54 $\mu$m et 2,07 $\mu$m, soit 0,5 $\mu$m environ.

Une telle solution est extrêmement intéressante car une telle fibre n'est pas sélective et l'accord de phase n'est pas critique.

Si on garde le même $\Delta n$, et si l'on fait varier $r_i$ ou $r_e$ dans les fourchettes indiquées plus haut, la largeur de la plage non critique peut aller jusqu'à 0,4 $\mu$m. A $\Delta n$ constant, il existe toujours un couple ($r_i$, $r_e$) dans les fourchettes indiquées plus haut pour lequel on a une plage non critique pour la longueur d'onde voulue dont la largeur peut aller jusqu'à 0,4 $\mu$m. La plage non critique glisse vers les longueurs d'onde plus faibles quand l'épaisseur de l'anneau diminue.

Une telle plage non critique permet d'obtenir le doublage de fréquence même si les sources de pompage présentent une certaine dispersion de fréquence d'émission due aux tolérances de fabrication.

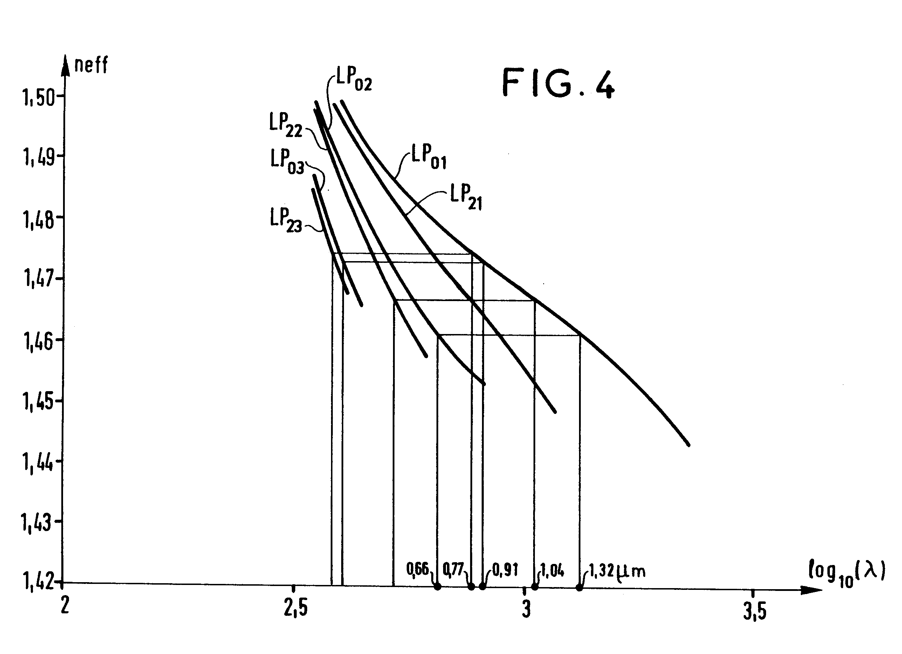

### Exemple III (voir figure 4)

On a une fibre présentant toujours le même $\Delta n = 3 \times 10^{-2}$, le rayon intérieur $r_i$ étant égal à 1 $\mu$m et le rayon extérieur $r_e$ étant égal à 2,5 $\mu$m. On a alors un accord optimum entre $LP_{01}$ et $LP_{02}$ pour 1,32 $\mu$m, et quelques accords secondaires pour 1,04 $\mu$m, 0,91 $\mu$m et 0,77 $\mu$m.

Les exemples II et III montrent que, si on se donne une longueur d'onde telle que 1,32 $\mu$m ou 1,54 $\mu$m, c'est-à-dire un centre de fenêtre de télécommunication, il existe une structure de fibre présentant un anneau avec un $\Delta n$  $3 \times 10^{-2}$ permettant de réaliser un accord optimum pour $\omega$ et $2\omega$.

### Example IV

On reprend la fibre de l'exemple II et le diagramme de la figure 3. Avec une telle fibre on peut réaliser des accords permettant une conversion en cascade : On a tout d'abord une conversion de 1,82 $\mu$m à 0,91 $\mu$m ($LP_{01}$ à $LP_{02}$), puis un transfert d'énergie à 0,91 $\mu$m de $LP_{02}$ à $LP_{01}$, puis une conversion de 0,91 $\mu$m à 0,45 $\mu$m ($LP_{01}$ à $LP_{03}$).

### Exemple V

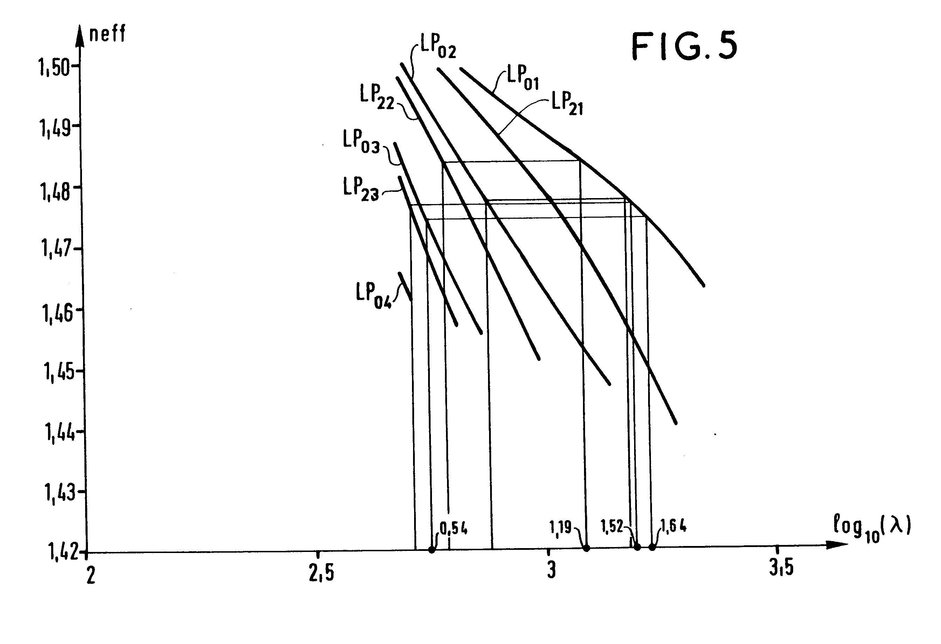

On prend une fibre présentant un $\Delta n$ de $5 \times 10^{-2}$, avec un rayon intérieur $r_i$ de 1 $\mu$m et un rayon extérieur $r_e$ de 3 $\mu$m. Un tel $\Delta n$ peut être obtenu en utilisant des oxydes de germanium ou de phosphore comme dopants (voir article R.B. DYOTT, J.R. COZENS, D.G. MORRIS - "Preservation of polarisation in optical fiber waveguides with elliptical cores", Electronics Letters 21/1979, 15 n° 13, p. 380-382). Le diagramme de la figure 5 fait apparaître un accord optimum entre $\omega$ et $3\omega$ pour $\lambda = 1,64$ $\mu$m et $\lambda = 0,546$ $\mu$m.

On note également des accords simultanés entre $\omega$ et $2\omega$ et $\omega$ et $3\omega$ pour 1,52 $\mu$m, et un accord secondaire entre $\omega$ et $2\omega$ pour 1,19 $\mu$m.

Dans tous les exemples précédents, le rendement de conversion pour et $2\omega$ est au moins égal à 50 % avec une onde de pompe de l'ordre de 400 watts et une fibre de quelques mètres de longueur.

Par ailleurs, il faut noter une particularité supplémentaire des fibres selon l'invention. Ces fibres présentent toujours un $\Delta n$ important au moins égal à $2 \times 10^{-2}$. Il apparaît dans ce cas pratiquement toujours au cours de leur fabrication une légère ellipticité que l'on peut mesurer par biréfringence et qui s'avère utile ici pour faciliter l'accord de phase. La fibre présente des indices effectifs légèrement différents suivant deux axes orthogonaux et cela donne un peu de latitude pour les valeurs des longueurs d'onde.

De manière générale, pour toutes les fibres annulaires selon l'invention, il existe toujours une longueur d'onde comprise entre 0,4 μm et 2,6 μm pour laquelle on a un accord optimum entre $\omega$ et $2\omega$. Inversement, si on se donne une longueur d'onde, on peut trouver au moins une fibre selon l'invention réalisant un accord optimum pour $\omega$ et $2\omega$.

Une application très intéressante des fibres selon l'invention est la conversion des fréquences optiques utilisées dans les fenêtres des télécommunications optiques (800, 1300, 1550 et 2550 nm) de façon à faciliter la détection.

Une fibre selon l'invention est particulièrement avantageuse dans un autocorrélateur à fibres optiques.

La technique de l'autocorrélation optique pour l'évaluation de la durée d'impulsions lumineuses ultra-courtes émises dans l'infra-rouge est décrite notamment dans l'article "Autocorrelation of short pulses using a single-mode fiber" par U. Osterberg et W. Margulis, IEEE J. Quant. Electronics, QE-24, Octobre 1988, p. 2127-2129.

On va décrire ci-dessous un laser faisant application d'une fibre selon l'invention. Les lasers à fibre optique sont déjà connus ; ils comportent des fibres dopées de différentes terres rares. Le tableau I ci-dessous donne les ions déjà utilisés et les longueurs d'onde d'émission correspondantes.

TABLEAU I

| Ion | laser (μm) $\lambda$ |
|---|---|
| $Nd^{3+}$ | 0,94/1,06-1,09/1,4 |
| $Er^{3+}$ | 1,54 |
| $Tm^{3+}$ | 1,8 |
| $Pr^{3+}$ | 1,07 |
| $Sm^{3+}$ | 0,65 |
| $Yb^{3+}$ | 1,02-1,14 |

Lorsque ce type de laser à fibre dopée fonctionne, par exemple, en régime déclenché et à mode bloqué, la puissance crête à l'intérieur de la cavité à la longueur d'onde laser peut atteindre 6 à 7 kW (voir article de I.N. DULING, L. GOLDBERG, J.F. WELLER, Electronics Letters, 24 (1988), p. 1333).

Jusqu'à présent, si l'on souhaitait une longueur d'onde d'émission dans le spectre visible, on disposait un dispositif doubleur de fréquence à l'extérieur de la cavité.

Dans le laser mettant en oeuvre une fibre selon l'invention, la fibre sert à la fois de milieu laser amplificateur et de doubleur de fréquence intracavité.

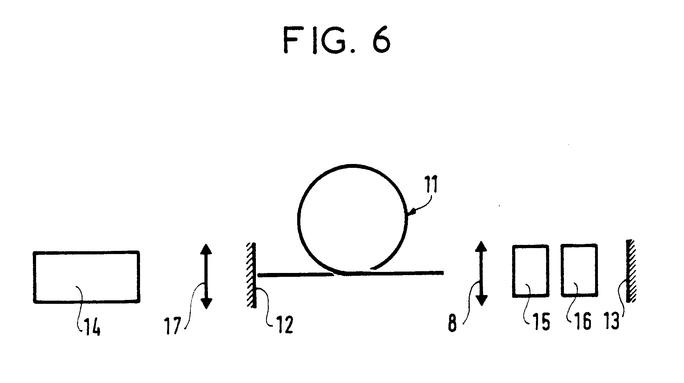

On voit dans le schéma de la figure 6 un segment de fibre 11 selon l'invention et dopée avec un ion des lanthanides, deux miroirs 12 et 13 définissant un résonateur optique, une source de pompage 14 adaptée au dopage de la fibre considérée, injectée dans le segment de fibre 11 à l'aide du dispositif de focalisation 17. Dans la cavité peuvent éventuellement être insérés un déclencheur 15, un bloqueur de modes 16 et le cas échéant une optique de collimation 18. La transmittance du miroir d'entrée 12 est maximale à la longueur d'onde de pompage et minimale à la longueur d'onde laser $\lambda$ et à la longueur d'onde $\lambda/2$. La transmittance du miroir de sortie est minimale à la longueur d'onde de pompage, à la longueur d'onde laser $\lambda$ et est ajustée à la longueur d'onde $\lambda/2$ pour l'utilisation considérée.

Si l'on choisit une longueur d'onde d'émission laser, on choisit alors un ion de terre rare (cf Tableau I). Ceci fixe alors une longueur d'onde de pompe compatible avec la fibre à base de silice dopée avec l'ion de terre rare choisi. Connaissant la longueur d'onde d'émission laser, on peut définir les paramètres de l'anneau de silice dopée au germanium correspondant au coeur selon l'invention pour obtenir le doublage de la fréquence d'émission laser. On peut alors déterminer le profil $LP_{01}$ et par conséquent la répartition la plus efficace de l'ion de terre rare dans la fibre.

A titre d'exemple, on pourra utiliser une fibre selon l'invention dopée avec du néodyme. Dans ce cas, on pourra utiliser comme longueur d'onde de pompe 0,82 μm (0,8 μm ≦ λρ ≦ 0,830 μm). Cette longueur d'onde peut être délivrée par une source de pompage constituée par un réseau de diodes laser de puissance.

Suivant la composition exacte de la matrice vitreuse de la fibre optique considérée, la longueur d'onde d'émission laser du néodyme se situe entre 1,06 et 1,09 μm.

Dans le cas d'une fibre selon l'invention fortement dopée au germanium, la longueur d'onde d'émission laser est proche de 1,09 μm.

En faisant fonctionner ce laser à mode bloqué et en mode déclenché, la puissance crête de l'impulsion la plus forte peut être d'environ plusieurs kilowatts à l'intérieur de la fibre optique. A ce niveau de puissance, le rendement de conversion peut être de l'ordre de 50 %. La longueur d'onde obtenue est d'environ 0,545 μm.

Bien entendu, l'invention n'est pas limitée aux modes de réalisation qui ont été exposés ci-dessus.

## Revendications

1. Fibre optique pour la conversion de fréquence, caractérisée par le fait que le coeur de la fibre présente une structure à profil d'indice annulaire à anneau unique permettant de réaliser l'accord de phase et le recouvrement optimum de deux modes propres de propagation de la fibre, l'un $LP_{01}$ propageant l'onde ω et l'autre $LP_{0k}$ l'onde kω avec $2 \leqq k \leqq 4$ pour au moins une longueur d'onde comprise entre 0,4 μm et 2,6 μm, le saut d'indice Δn de l'anneau étant compris entre $2 \times 10^{-2}$ et $5 \times 10^{-2}$, le rayon intérieur $r_i$ de l'anneau étant compris entre 0,5 μm et 1,5 μm, et le rayon extérieur $r_e$ de l'anneau étant compris entre 2 μm et 3,5 μm.

2. Fibre optique selon la revendication 1, caractérisée par le fait que, pour le doublage de fréquence, Δn est compris entre $2 \times 10^{-2}$ et $3 \times 10^{-2}$.

3. Fibre optique selon la revendication 1, caractérisée par le fait que, pour le triplage de fréquence, Δn est compris entre $3 \times 10^{-2}$ et $5 \times 10^{-2}$.

4. Fibre optique selon l'une des revendications précédentes, caractérisée par le fait qu'elle présente une légère ellipticité.

5. Application d'une fibre optique selon l'une des revendications précédentes à une fibre laser dopée en outre par un ion de terre rare.

6. Application selon la revendication 5, caractérisée par le fait que ladite fibre est dopée au néodyme, que la source de pompage est constituée par un réseau de diodes laser de puissance, et que la longueur d'onde d'émission est d'environ 0,545 μm.

## Patentansprüche

1. Lichtleitfaser zur Frequenzumwandlung, dadurch gekennzeichnet, daß der Kern der Faser eine Struktur eines einzigen Rings mit ringförmigem Brechungsindexprofil aufweist, die es ermöglicht, die Phasenabstimmung und die optimale Überdeckung von zwei Ausbreitungseigenmodi der Faser zu bewirken, von denen der eine $LP_{01}$ die Welle ω und der andere $LP_{0k}$ die Welle kω, wobei $2 \leqq k \leqq 4$ ist, für mindestens eine zwischen 0,4 μm und 2,6 μm liegende Wellenlänge überträgt, wobei der Brechungsindexsprung Δn des Ringes zwischen $2 \times 10^{-4}$ und $5 \times 10^{-2}$, der Innendurchmesser $r_i$ des Ringes zwischen 0,5 μm und 1,5 μm, und der Außendurchmesser $r_e$ des Ringes zwischen 2 μm und 3,5 μm liegt.

2. Lichtleitfaser nach Anspruch 1, dadurch gekennzeichnet, daß für die Frequenzverdoppelung der Wert Δn zwischen $2 \times 10^{-2}$ und $3 \times 10^{-2}$ liegt.

3. Lichtleitfaser nach Anspruch 1, dadurch gekennzeichnet, daß zur Frequenzverdreifachung der Wert Δn zwischen $3 \times 10^{-2}$ und $5 \times 10^{-2}$ liegt.

4. Lichtleitfaser nach einem der vorhergehenden Ansprüche, dadurch gekennzeichnet, daß sie eine leicht elliptische Form besitzt.

**5.** Anwendung einer Lichtleitfaser gemäß einem der vorhergehenden Ansprüche auf eine Laserfaser, die mit dem Ion einer seltenen Erde dotiert ist.

**6.** Anwendung nach Anspruch 5, dadurch gekennzeichnet, daß die Faser mit Neodym dotiert ist, daß die Pumpquelle aus einem Leistungslaserdiodengitter besteht, und daß die Emissionswellenlänge ungefähr 0,545 μm beträgt.

**Claims**

**1.** An optical fiber for frequency conversion, characterized in that the core of the fiber has a one-ring annular index profile structure allowing to obtain phase matching and optimum overlap of two fiber's resonant propagation modes, one $LP_{01}$ propagating the wave $\omega$ and the other $LP_{0k}$ the wave $k\omega$, where $2 \leqq k \leqq 4$ for at least one wavelength lying in the range 0.4 μm to 2.6 μm, with the index step $\delta n$ of the ring lying in the range $2 \times 10^{-2}$ and $5 \times 10^{-2}$, the inside radius $r_i$ of the ring lying in the range 0,5 mm to 1,5 μm, and the outside radius $r_e$ of the ring lying in the range 2 μm to 3,5 μm.

**2.** An optical fiber according to claim 1, characterized by the fact that for frequency doubling, $\delta n$ lies in the range $2 \times 10^{-2}$ and $3 \times 10^{-2}$.

**3.** An optical fiber according to claim 1, characterized in that for frequency tripling, $\delta n$ lies in the range $3 \times 10^{-2}$ and $5 \times 10^{-2}$.

**4.** An optical fiber according to any preceding claim, characterized by the fact that it is slightly elliptical.

**5.** An application of an optical fiber according to any preceding claim to a laser fiber which is also doped using a rare earth ion.

**6.** An application according to claim 5, characterized by the fact that the said fiber is doped with neodymium, the pumping source is constituted by an array of power laser diodes, and the emission wavelength is about 0.545 μm.

FIG.2

FIG.1

EP 0 387 740 B1

FIG. 3

neff

LP22
LP02
LP21
LP01
LP23  LP03

1,50
1,49
1,48
1,47
1,46
1,45
1,44
1,43
1,42

0,45       0,91       1,54   1,82    2,07 μm

log₁₀(λ)

2              2,5                3              3,5

EP 0 387 740 B1

FIG. 4

neff (y-axis): 1,50 1,49 1,48 1,47 1,46 1,45 1,44 1,43 1,42

$\log_{10}(\lambda)$ (x-axis): 2  2,5  3  3,5

$LP_{02}$
$LP_{22}$
$LP_{03}$
$LP_{23}$
$LP_{01}$
$LP_{21}$

0,66  0,77  0,91  1,04  1,32 µm

EP 0 387 740 B1

FIG.5

# FIG. 6